# EUROPEAN PATENT SPECIFICATION

(11) **EP 4 416 073 B1**
(45) Date of publication and mention of the grant of the patent: **23.07.2025**
(21) Application number: 22802050.9
(22) Date of filing: 10.10.2022
(51) Int. Cl.: B65D 65/46, B65D 85/804

(54) **A BEVERAGE CAPSULE COMPRISING A BARRIER LINER ATTACHED TO A PULP BODY**
GETRÄNKEKAPSEL MIT EINER AN EINEM ZELLSTOFFKÖRPER BEFESTIGTEN SPERRSCHICHT
CAPSULE DE BOISSON COMPRENANT UN REVÊTEMENT BARRIÈRE FIXÉ À UN CORPS EN PÂTE À PAPIER

(30) Priority: 15.10.2021 EP 21202831
(43) Date of publication of application: 21.08.2024
(73) Proprietor: Société des Produits Nestlé S.A., 1800 Vevey (CH)
(72) Inventor: HAUSMANN, Michael Karlheinz, 2012 Auvernier (CH); BOURG, Violette, 01220 Divonne Les Bains (FR); ZIMMER, Johannes, 1012 Lausanne (CH); DANNENBERG, Christina, 1012 Lausanne (CH)
(74) Representative: Rosolen-Delarue, Katell
(86) International application number: PCT/EP2022/078007
(87) International publication number: WO 2023/061891

(56) References cited:
- WO-A1-2015/082982
- WO-A1-2017/144009
- WO-A1-2021/145764
- WO-A2-2020/114995

## Description

### Field of the invention

It is hereby disclosed a capsule for beverage preparation that is recyclable in the paper recycling stream and comprises an outer body made of compressed cellulosic pulp, which is doubled with gas and moisture barrier liner tightly adhered to said pulp body.

### Background of the invention

Capsules and pods for beverage preparation in a beverage preparation machine are well known. They are a convenient and clean approach to beverage consumption. In the following description, the generic term "capsule" will be used and encompasses single use packages for preparing beverages for human consumption by insertion in a beverage preparation machine that is adapted to inject a fluid - in principle hot water - into the package for mixing with an ingredient contained therein. Examples of such beverage packages are not limited to rigid capsules, but also comprise rigid, semi-rigid, or flexible pods, pads, cartridges of various types, and even sachet-type containers.

Typically, such capsules are manufactured from plastics such as polyolefins or biodegradable plastics, that are generally injected or thermoformed to obtain a cup that is filled with an ingredient and then closed with a membrane to close the capsule in a gas and moisture tight manner.

In the recent period, awareness about the environment impact of packaging plastics on the increased, and there is a need for new packaging solutions that are either biodegradable after use, or recyclable, and in particular such that a used package can be either composted or recycled in a recycling stream that is adapted for paper or carton ("paper recycling stream").

Recently, beverage preparation capsules have been developed which are made of cellulosic fiber pulp (or "cellulose pulp" or "paper pulp") which is moulded to form a rigid or semi-rigid capsule cup-shaped body defining a compartment for containing a beverage precursor ingredient such as roast and ground coffee. The cup-shaped body is closed by attaching (e.g. by sealing) a wall, for instance a membrane or a film to it.

In order to guarantee freshness of the beverage precursor ingredient over the lifetime of the capsule, and especially during storage until use, it is necessary to incorporate an oxygen and moisture barrier material to the cellulosic pulp (as well as to the closing membrane). The barrier material generally takes the form of a so-called "barrier liner" which is a mono- or multilayer film that is adhered to the internal surface of the pulp body (i.e. the surface turned towards the ingredient). Adhering the liner onto the pulp is done by thermoforming the two in a mould.

During beverage preparation, the capsule is inserted into a brewing chamber of a beverage preparation machine. The machine comprises water injection means, such as a set of blades designed to pierce through the thickness of the capsule body and inject water therein under pressure. Water mixes with the ingredient which produces a beverage. When water pressure increases and reaches a certain level, the closing membrane deflects outwardly and pierces onto piercing means of the beverage machine. When the membrane is pierced, the beverage can flow outside the capsule, towards a cup.

WO2021/145764 A1 discloses a container comprising a moulded fiber matric and being provided on its inner surface with a biodegradable multi-layer. The biodegradable multi-layer has a five-layer structure in which the inner cover layer and the outer cover layer comprise an amount of biodegradable aliphatic polyester and integrating as middle layer a functional barrier layer comprising PVOH. A first and second intermediate layers of a biodegradable material for connecting and/or sealing adjacent layers are provided.

WO2015/082982 A1 proposes a capsule comprising a body made of paper material and a plastic laminate made of PLA/PVOH/PLA.

WO2020/114995 A2 discloses a capsule comprising a body made of cellulose (paper) and a plastic laminate made of PLA/PVOH/PLA having a defined tensile value at break between 2% and 20% of the whole laminate.

Beverage preparation with pulp-based capsules as described above is a very promising way to reduce the environmental footprint of packages. However, a technical drawback appeared during piercing of the capsule body by the water injection blades of the machine. At the time the water injection blades pierce through the capsule pulp body, these blades catch pulp material and as they move towards the interior of the capsule, the mass of pulp attached to the blades delaminates the liner from the pulp and pushes the liner without piercing it. This delamination effect is reinforced by the elasticity of the liner which is higher than that of the pulp. As a result, the liner is dragged towards the interior of the capsule without being pierced, and when water injection starts, no water enters into the capsule compartment: the capsule is blocked and no beverage comes out.

It is an object of the present invention to provide a technical solution to the delamination challenge mentioned above in beverage capsules made of moulded pulp and having a barrier liner.

### Summary of the invention

The object of the invention is achieved with a capsule according to claim 1.

Interestingly, the polymers that are suitable for the invention are biodegradable polymers, preferably home compostable polymers. Home compostability is now well defined on a national level and mainly based on international standard EN 13432; therefore, they do not require to be further defined in-depth in the present specification. Materials or products compliant with these standards can be recognized by a conformity mark stating their home compostability. Some examples of home compostability certifications at a national level include, but are not limited to, the following. The certifier TÜV AUSTRIA BELGIUM offers such a home compostability certification scheme, and DIN CERTCO offers a certification for home compostability according to the Australian standard AS 5810. Italy has a national standard for composting at ambient temperature, UNI 11183:2006. In November 2015, the French Standard "NF T 51-800 Plastics - Specifications for plastics suitable for home composting" was introduced. This standard is covered in the DIN CERTCO scheme.

A multilayer liner may be provided with a barrier (to oxygen and/or moisture) as a middle layer. The physical characteristics of the innermost and outermost layers are carefully selected:
- the outermost layer in contact with the pulp has a low melting point temperature (below 80°C) which brings high cohesion to the pulp; this is due to the fact that during thermoforming process of the liner to the pulp body, when temperature increases, the polymer constitutive of the outermost layer flows rapidly and with a low viscosity between the pulp fibers of the body, and impregnates the pulp; then, when temperature decreases after the thermoforming step, the polymer layer of the liner hardens and polymer is completely intricated between the pulp fibers, such that it is impossible to delaminate the liner from the pulp body, and in addition
- the innermost layer in contact with the beverage ingredient has a high melting point (above 110°C). A higher melting point than the outermost layer guarantees that during thermo-forming of the liner with the pulp, said outermost layer melts very fast and in a perfectly liquid state due its melting point which is well below the usual thermo-forming temperature, such that it flows in between the cellulosic fibers of the pulp, and such that when it cools down after thermoforming, the material constitutive of
said outermost layer is intricated with the pulp cellulosic fibers and adheres to them. At the same time, the innermost layer does not melt during the thermo-forming process step, due to its higher melting point (which is above the usual thermo-forming temperature), such that it separates easily from the thermo-form plug when the thermoforming of the liner to the pulp is completed and the thermo-forming mould is open.

In one advantageous embodiment of the invention, the polymer of the innermost layer is an annealed polymer to lower its elongation at break characteristics, thus making it less elastic and even easier to pierce by the blades.

By "liner" it is meant a monolayer or multilayer film that is obtained by extrusion-blowing, or extrusion-lamination, or cast-extrusion.

A monolayer or multilayer liner applied to the pulp substrate is different from a monolayer or multilayer obtained by coating the pulp substrate. Coating a barrier layer onto a moulded pulp substrate is challenging because the surface of the moulded pulp is rough and uneven. As a result, it is necessary to coat a high thickness of a preparation surface coating in order to smoothen the pulp surface before a barrier layer can be coated. If the surface is not smoothened, there is a risk that the barrier layer may be applied in an uneven manner and such that some zones are not sufficiently coated, hence impairing the barrier properties of the whole item. The application of a liner does not pose such a problem because all layers are preformed in an even manner, and such that the barrier layer is homogeneous across the entire surface of said liner before the latter is applied to the moulded pulp substrate. The barrier quality is therefore guaranteed across the entire surface of the resulting item and requires less polymeric material than a coating.

Furthermore, a coating is normally applied on a flat sheet of substrate material. However, a capsule has a tridimensional geometry which makes it difficult, if not impossible to coat with a thin molten polymer layer.

In a preferred embodiment of the invention, the cup-shaped body comprises a peripheral rim onto which the closing membrane is attached.

Advantageously, at least the outermost, innermost, barrier and tie layers are co-extruded (extrusion-casted) layers.

In a proposed embodiment, the biodegradable polymer of the outermost and/or of the innermost layers of the multilayer polymeric liner is bio-based.

In a preferred embodiment of the invention, the closing membrane is made of an extrusion coated paper, a fiber-spinning coated paper, or a polymer film comprising a compatible polymer material. This is to ensure optimal sealing adhesion between the liner and the closing membrane at the time the capsule is closed.

Preferably, the ingredient contained in the capsule according to the invention is roast and ground coffee.

### Brief description of the drawings

Additional features and advantages of the present invention are described in, and will be apparent from, the description of the presently preferred embodiments which are set out below with reference to the drawings in which:
**Figure 1** is a schematic cut view of a capsule according to the invention;
**Figure 2** is a schematic cut view of a multilayer liner according to the invention;
**Figures 3A****,** **3B**, **4A to 4C** and **5** are schematic views of the different steps of attaching a barrier liner to a pulp cup-shaped body according to the invention.

### Detailed description of the invention

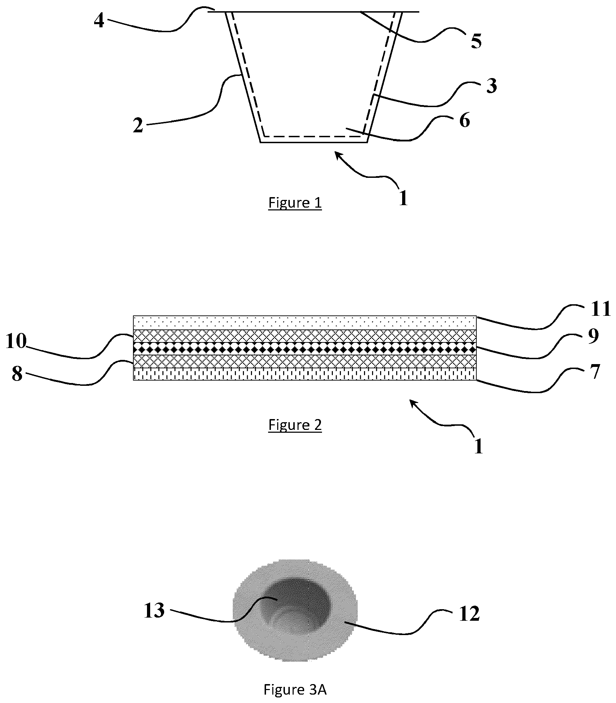

As illustrated in the embodiment of **figure 1**, the invention concerns a beverage preparation capsule 1, comprising a cup-shaped capsule body 2 covered on its inner surface by an oxygen and barrier liner 3. The capsule body 2 further comprises a peripheral rim 4 that surrounds an opening, said opening being closed by a membrane 5 that is sealed onto the rim 4. The capsule body closed by the membrane 5 defines a compartment 6 for a roast and ground coffee ingredient contained therein.

The barrier liner 3 is a multi-layer film, an embodiment of which is illustrated in **figure 2**. In this embodiment, the liner comprises the following layers attached one to another.

First, it comprises an outermost polymeric layer 7, made of a polybutylene adipate terephthalate (PBAT) based formulation. This outermost layer has a thickness of 17 µm, and an elongation at break of 600% and serves as an adhesive to the pulp. It also features a melt flow rate (MFR) of 3 (measured at 150°C during 10 minutes with a pressure of 2.16 kg), and a melting point temperature of 75°C.

The thickness of the outermost layer may vary between 10 and 100 µm depending on the applications.

To the outermost layer 7 is attached a first tie layer 8 made of a biopolyester grafted with maleic anhydride, having a melting point temperature of 200°C and a thickness of 4 µm. The tie layer 8 is an adhesive layer that binds tightly the outermost layer 7 to the barrier layer 9 that will now be described.

As a core layer located in the middle of the multilayer liner structure is a barrier layer 9 made of butenediol vinyl alcohol copolymer (BVOH), having a melting point temperature comprised of 200°C and a thickness of 8 µm. This barrier layer provides barrier against oxygen and moisture transfer between the outside atmosphere and the capsule compartment.

To the barrier layer 9 is attached a second tie layer 10 made of a biopolyester grafted with maleic anhydride, having a melting point temperature of 200°C and a thickness of 4 µm.

Lastly, the liner in this embodiment depicted in **figure 2** comprises an innermost polymeric layer 11 made of polybutylene adipate terephthalate (PBAT) based formulation. This innermost layer has a thickness of 17 µm, and an elongation at break of 177%. It also features a melt flow rate (MFR) of 6 measured at 190°C during 10 minutes with a pressure of 2.16 kg. This layer has a melting point temperature of 115°C.

The thickness of the inner termost layer may vary between 10 and 100 µm depending on the applications.

Additionally, according to the needs, the multilayer polymer liner 3 may have a symmetric or an asymmetric structure depending on the thickness of the different layers, and especially of the outermost and innermost layers.

As a preference, the biodegradable polymer of the outermost and/or of the innermost layers of the multilayer polymeric liner is bio-based.

More precisely, the various layers of the liner according to the present invention can be chosen according to the following table, which provides various thicknesses that can be chosen for each of the different layers:

| **LAYER** | **Grade Name** | **Tm (°C)** | **MFR** | | **total thickness** | **50** | **60** | **80** | **100** | **50** | **Commercial name of polymer** | **Supplier** |
|---|---|---|---|---|---|---|---|---|---|---|---|---|
| Outermost layer (adhesive) | KF01U | 75 | 3 | (150°C/10' - 2.16 kg) | | 17 | 22 | 32 | 42 | 15 | MaterBi | NOVAMONT |
| Tie layer | BTR800P | 200 | | | | 4 | 4 | 4 | 4 | 5 | | MCPP |
| Barrier | BVE8049P | 200 | | | | 8 | 8 | 8 | 8 | 10 | G-polymer | MCPP |
| Tie | BTR800P | 200 | | | | 4 | 4 | 4 | 4 | 5 | | MCPP |
| Innermost layer (functional) | ES03B0* | 115 | 6 | (190°C/10' - 2.16 kg) | | 17 | 22 | 32 | 42 | 15 | MaterBi | NOVAMONT |

The capsule according to the invention is manufactured with the following steps, in order.

As illustrated in **figure 3A**, a capsule cup 12 is first moulded from a dry or wet (preferably wet) pulp mixture. Moulding cellulose pulp is known in the art already and will not be described in more detail in the present description. The pulp cup 12 has an opening 13 into which a roast and ground coffee ingredient can be filled (not illustrated).

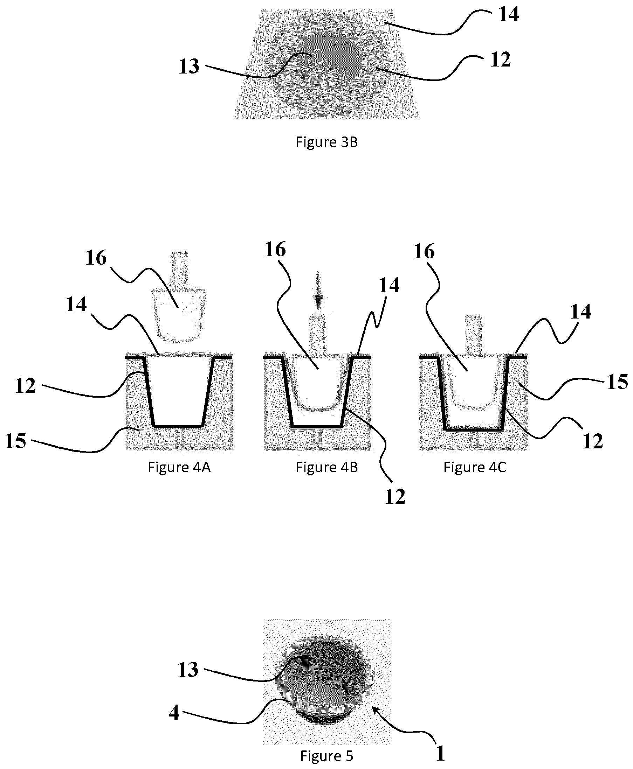

The barrier liner film 3 is then provided as a flat sheet 14 and placed over the opening 13 of the pulp cup 12, while said cup 12 is placed in a mould 15, as depicted in **figures 3B** and **4A**.

Then, as shown in **figure 4B****,** a plunger 16 is applied onto the surface of the flat sheet 14, which is moved towards the interior of the cup 12, such that the barrier liner sheet is pushed into the vicinity of the cup's interior, until said liner is fully attached to the pulp cup surface as shown in **figure 4C****.** The technique of attaching the barrier liner sheet 14 to the surface of the pulp cup 12 is largely based on thermoforming techniques.

Once the attachment process of the barrier liner sheet 14 onto the inside surface of the pulp cup 12 is terminated, the peripheral rim 4 is trimmed (i.e. cut to the right diameter) so that an empty pulp capsule with barrier properties is obtained as illustrated in **figure 5****,** which comprises an opening through which a coffee powder is filled. Then, the filled capsule is closed by sealing a membrane 5 onto the rim 4 of said capsule.

It should be understood that various changes and modifications to the presently preferred embodiments described herein will be apparent to those skilled in the art. Such changes and modifications can be made without departing from the invention which is defined

by the appended claims.

## Claims

1. A capsule (1) for beverage preparation, comprising a cup-shaped body (2) and a closing membrane (5) attached to said body (2), said body (2) and membrane (5) defining a closed ingredient compartment (6), said capsule being adapted to be pierced by water injection means of a beverage preparation machine for injecting water under pressure in the compartment, and said membrane (5) being adapted to pierce onto opening means of said machine for dispensing a beverage prepared within said compartment when water pressure inside the compartment reaches a predetermined value, at least said capsule body being made of rigid or semi-rigid moulded cellulose pulp, said capsule (1) further comprising a multilayer polymeric liner (3) attached to the inner surface of the cellulose pulp body (2), said liner comprising:
(i) an outermost polymeric layer (7) comprising a biodegradable polymer selected within the list of: polybutylene succinate (PBSA / bioPBS), polybutylene adipate terephthalate (PBAT), starch, cellulose derivates, polylactic acid (PLA), polyhydroxyalcanoates (PHA), or a combination thereof, said outermost layer having a thickness comprised between 10 and 100 µm,
(ii) a first tie layer (8) comprising a biodegradable modified or functionalized polyolefin, having a melting point temperature comprised between 180°C and 230°C and a thickness comprised between 1 and 12 µm,
(iii) a barrier layer (9) comprising a polymer selected within the list of: butenediol vinyl alcohol copolymer (BVOH), polyvinyl alcohol (PVOH) or a combination thereof, and having a melting point temperature comprised between 180°C and 230°C and a thickness comprised between 1 and 15 µm,
(iv) a second tie layer (10) comprising a biodegradable modified or functionalized polyolefin, having a melting point temperature comprised between 180°C and 230°C and a thickness comprised between 1 and 10 µm,
(v) an innermost polymeric layer (11) comprising a biodegradable polymer selected within the list of: polybutylene succinate (PBSA), polybutylene adipate terephthalate (PBAT), starch, cellulose derivates, polylactic acid (PLA), polyhydroxyalcanoates (PHA) or a combination thereof, said innermost layer having a thickness comprised between 10 and 100 µm, and said innermost layer having a melting point temperature comprised between 110°C and 180°C,
**said capsule being characterised in that**
- said outermost layer (7) has an elongation at break comprised between 10% and 800%, a melt flow rate (MFR) comprised between 2 and 4 when measured at 150°C during 10 minutes with a pressure of 2.16 kg, and a melting point temperature below 80°C, and
- said innermost layer (11) has an elongation at break comprised between 10% and 1000% and a melt flow rate (MFR) comprised between 4 and 10 when measured at 190°C during 10 minutes with a pressure of 2.16 kg.

2. A capsule (1) according to claim 1, wherein said cup-shaped body (2) comprises a peripheral rim (4) onto which the closing membrane (5) is attached.

3. A capsule (1) according to any one of the preceding claims 1 or 2, wherein at least the outermost (7), innermost (11), barrier (9) and tie layers (8, 10) are co-extruded layers.

4. A capsule (1) according to any one of the preceding claims, wherein the closing membrane (5) is made of an extrusion coated paper, a fiber-spinning coated paper, or a polymer film comprising a compatible polymer material.

5. A capsule (1) according to any one of the preceding claims, wherein the polymer of the innermost layer (11) is an annealed polymer.

6. A capsule (1) according to any one of the preceding claims, wherein the outermost layer (7) and innermost layer (11) of the multilayer polymeric liner (3) have different thickness.

7. A capsule (1) according to any one of the preceding claims, wherein the biodegradable polymer of the outermost (7) and/or of the innermost (11) layers of the multilayer polymeric liner (3) is bio-based.

8. A capsule (1) according to any one of the preceding claims wherein said ingredient is roast and ground coffee.

## Patentansprüche

1. Kapsel (1) für eine Getränkezubereitung, umfassend einen becherförmigen Körper (2) und eine an dem Körper (2) befestigte Verschlussmembran (5), wobei der Körper (2) und die Membran (5) eine geschlossene Zutatenkammer (6) bilden, wobei die Kapsel geeignet ist, um von einer Wassereinspritzeinrichtung einer Getränkezubereitungsmaschine zum Einspritzen von Wasser unter Druck in die Kammer durchstochen zu werden, und wobei die Membran (5) geeignet ist, um auf eine Öffnungseinrichtung der Maschine zum Ausgeben eines in der Kammer zubereiteten Getränks zu durchstechen, wenn ein Wasserdruck in der Kammer einen vorbestimmten Wert erreicht, wobei mindestens der Kapselkörper aus starrem oder halbstarrem geformtem Zellstoff besteht, die Kapsel (1) ferner umfassend: eine mehrschichtige Polymerauskleidung (3), die an der Innenoberfläche des Zellstoffkörpers (2) befestigt ist, die Auskleidung umfassend:
(i) eine äußerste Polymerschicht (7), umfassend ein biologisch abbaubares Polymer, ausgewählt aus der Liste: Polybutylensuccinat (PBSA/BioPBS), Polybutylenadipatterephthalat (PBAT), Stärke, Cellulosederivate, Polymilchsäure (PLA), Polyhydroxyalcanoate (PHA) oder eine Kombination davon, wobei die äußerste Schicht eine Dicke aufweist, die zwischen 10 und 100 µm beträgt,
(ii) eine erste Verbindungsschicht (8), umfassend ein biologisch abbaubares modifiziertes oder funktionalisiertes Polyolefin, das eine Schmelztemperatur, die zwischen 180 °C und 230 °C beträgt, und eine Dicke aufweist, die zwischen 1 und 12 µm beträgt,
(iii) eine Barriereschicht (9), umfassend ein Polymer, das aus der Liste ausgewählt ist: Butendiolvinylalkohol-Copolymer (BVOH), Polyvinylalkohol (PVOH) oder eine Kombination davon, und die eine Schmelztemperatur, die zwischen 180 °C und 230 °C beträgt, und eine Dicke aufweist, die zwischen 1 und 15 µm beträgt,
(iv) eine zweite Verbindungsschicht (10), umfassend ein biologisch abbaubares modifiziertes oder funktionalisiertes Polyolefin, die eine Schmelztemperatur, die zwischen 180 °C und 230 °C beträgt, und eine Dicke aufweist, die zwischen 1 und 10 µm beträgt,
(v) eine innerste Polymerschicht (11), umfassend ein biologisch abbaubares Polymer, das aus der Liste ausgewählt ist: Polybutylensuccinat (PBSA), Polybutylenadipatterephthalat (PBAT), Stärke, Cellulosederivate, Polymilchsäure (PLA), Polyhydroxyalcanoate (PHA) oder eine Kombination davon, wobei die innerste Schicht eine Dicke aufweist, die zwischen 10 und 100 µm beträgt,
und wobei die innerste Schicht eine Schmelztemperatur aufweist, die zwischen 110 °C und 180 °C beträgt,
**wobei die Kapsel dadurch gekennzeichnet ist, dass**
- die äußerste Schicht (7) eine Bruchdehnung zwischen 10 % und 800 %, eine Schmelzflussrate (MFR) zwischen 2 und 4, wenn bei 150 °C über 10 Minuten mit einem Druck von 2,16 kg gemessen, und eine Schmelztemperatur unter 80 °C aufweist, und
- die innerste Schicht (11) eine Bruchdehnung zwischen 10 % und 1000 % und eine Schmelzflussrate (MFR) zwischen 4 und 10 aufweist, wenn bei 190 °C über 10 Minuten mit einem Druck von 2,16 kg gemessen.

2. Kapsel (1) nach Anspruch 1, wobei der becherförmige Körper (2) einen Umfangsrand (4) umfasst, auf dem die Verschlussmembran (5) befestigt ist.

3. Kapsel (1) nach einem der vorstehenden Ansprüche 1 oder 2, wobei mindestens die äußerste (7), die innerste (11), die Barriere- (9) und die Verbindungsschicht (8, 10) coextrudierte Schichten sind.

4. Kapsel (1) nach einem der vorstehenden Ansprüche, wobei die Verschlussmembran (5) aus einem extrusionsbeschichteten Papier, einem faserspinnbeschichteten Papier oder einem Polymerfilm besteht, umfassend ein kompatibles Polymermaterial.

5. Kapsel (1) nach einem der vorstehenden Ansprüche, wobei das Polymer der innersten Schicht (11) ein geglühtes Polymer ist.

6. Kapsel (1) nach einem der vorstehenden Ansprüche, wobei die äußerste Schicht (7) und die innerste Schicht (11) der mehrschichtigen Polymerauskleidung (3) unterschiedliche Dicken aufweisen.

7. Kapsel (1) nach einem der vorstehenden Ansprüche, wobei das biologisch abbaubare Polymer der äußersten (7) und/oder der innersten (11) Schichten der mehrschichtigen Polymerauskleidung (3) biobasiert ist.

8. Kapsel (1) nach einem der vorstehenden Ansprüche, wobei die Zutat gerösteter und gemahlener Kaffee ist.

## Revendications

1. Capsule (1) destinée à la préparation de boissons, comprenant un corps en forme de coupelle (2) et une membrane de fermeture (5) fixée audit corps (2), ledit corps (2) et ladite membrane (5) définissant un compartiment d'ingrédients (6) fermé, ladite capsule étant adaptée pour être percée par le moyen d'injection d'eau d'une machine de préparation de boissons afin d'injecter de l'eau sous pression dans le compartiment, et ladite membrane (5) étant adaptée pour être percée sur le moyen d'ouverture de ladite machine afin de distribuer une boisson préparée dans ledit compartiment, lorsque la pression d'eau à l'intérieur du compartiment atteint une valeur prédéterminée, au moins ledit corps de capsule étant constitué de pâte de cellulose moulée rigide ou semi-rigide, ladite capsule (1) comprenant en outre un revêtement polymère multicouche (3) fixé à la surface intérieure du corps de pâte de cellulose (2), ledit revêtement comprenant :
(i) une couche polymérique externe (7) comprenant un polymère biodégradable choisi dans la liste suivante : polysuccinate de butyle (PBSA/bioPBS), polybutylène adipate-téréphtalate (PBAT), amidon, dérivés de cellulose, acide polylactique (PLA), polyhydroxyalcanoates (PHA), ou une combinaison de ceux-ci, ladite couche externe ayant une épaisseur comprise entre 10 et 100 µm,
(ii) une première couche de liaison (8) comprenant une polyoléfine modifiée ou fonctionnalisée biodégradable, ayant une température de point de fusion comprise entre 180 °C et 230 °C et une épaisseur comprise entre 1 et 12 µm,
(iii) une couche barrière (9) comprenant un polymère choisi dans la liste suivante : copolymère de butènediol-alcool vinylique (BVOH), alcool polyvinylique (PVOH) ou une combinaison de ceux-ci, et ayant une température de point de fusion comprise entre 180 °C et 230 °C et une épaisseur comprise entre 1 et 15 µm,
(iv) une seconde couche de liaison (10) comprenant une polyoléfine modifiée ou fonctionnalisée biodégradable, ayant une température de point de fusion comprise entre 180 °C et 230 °C et une épaisseur comprise entre 1 et 10 µm,
(v) une couche polymérique la plus interne (11) comprenant un polymère biodégradable choisi dans la liste suivante : polysuccinate de butyle (PBSA), polybutylène adipate-téréphtalate (PBAT), amidon, dérivés de cellulose, acide polylactique (PLA), polyhydroxyalcanoates (PHA) ou une combinaison de ceux-ci, ladite couche la plus interne ayant une épaisseur comprise entre 10 et 100 µm,
et ladite couche la plus interne a une température de point de fusion compris entre 110 °C et 180 °C,
**ladite capsule étant caractérisée en ce que**
- ladite couche extérieure (7) présente un allongement à la rupture compris entre 10 % et 800 %, un indice de fluidité à chaud (IFC) compris entre 2 et 4, lorsqu'il est mesuré à 150 °C pendant 10 minutes avec une pression de 2,16 kg, et une température de point de fusion inférieure à 80 °C, et
- ladite couche la plus interne (11) présente un allongement à la rupture compris entre 10 % et 1000 % et un indice de fluidité à chaud (IFC) compris entre 4 et 10, lorsqu'il est mesuré à 190 °C pendant 10 minutes avec une pression de 2,16 kg.

2. Capsule (1) selon la revendication 1, dans laquelle le corps en forme de coupelle (2) comprend un bord périphérique (4) sur lequel la membrane de fermeture (5) est fixée.

3. Capsule (1) selon l'une quelconque des revendications précédentes 1 ou 2, dans laquelle au moins les couches la plus externe (7), la plus interne (11), de barrière (9) et de liaison (8, 10) sont des couches co-extrudées.

4. Capsule (1) selon l'une quelconque des revendications précédentes, dans laquelle la membrane de fermeture (5) est constituée d'un papier enduit par extrusion, d'un papier enduit par filage de fibres, ou d'un film polymère comprenant un matériau polymère compatible.

5. Capsule (1) selon l'une quelconque des revendications précédentes, dans laquelle le polymère de la couche la plus interne (11) est un polymère recuit.

6. Capsule (1) selon l'une quelconque des revendications précédentes, dans laquelle la couche la plus externe (7) et la couche la plus interne (11) du revêtement polymère multicouche (3) ont une épaisseur différente.

7. Capsule (1) selon l'une quelconque des revendications précédentes, dans laquelle le polymère biodégradable de la couche la plus externe (7) et/ou de la couche la plus interne (11) du revêtement polymère multicouche (3) est biosourcé.

8. Capsule (1) selon l'une quelconque des revendications précédentes, dans laquelle ledit ingrédient est du café torréfié et moulu.
